# EUROPEAN PATENT APPLICATION

(11) **EP 4 002 238 A1**
(43) Date of publication of application: **25.05.2022**
(21) Application number: 20207447.2
(22) Date of filing: 13.11.2020
(51) Int. Cl.: G06Q 10/06

(54) **SYSTEM AND METHOD FOR SIMULATING A SYSTEM FOR MANUFACTURING AND/OR ROUTING A PRODUCT**

(71) Applicant: Atos Nederland B.V., 1185 MC Amstelveen (NL)
(72) Inventor: DIJKSTRA, Erwin, 6584BK Molenhoek (NL); PIJPER, Mark, 2011SK Haarlem (NL); GRYZLOV, Dmitri, Reigate, Surrey RH2 7BN (GB); CHUNG, Hol Thing (Kenny), 2522TH Den Haag (NL)
(74) Representative: Cabinet Camus Lebkiri

(57) **Abstract**

The invention relates to a computer-implemented method for simulating a system for manufacturing and/or routing a product, the method being characterized in that it comprises:
- An initialization phase comprising:
- Acquisition of a manufacturing and/or routing goal by a planification module;
- Acquisition of at least one manufacturing and/or routing constraint by the planification module;

- A calculation phase comprising:
- Production by the planification module, of an order list including at least one manufacturing and/or routing order, according to the acquired goal and each acquired constraint;
- Acquisition of the order list by a runtime simulation module;
- Acquisition of a runtime context by the runtime simulation module;
- Running of the order list in the runtime context by the runtime simulation module;
- If at least one order of the order list is not executed due to the runtime context:
- Production of at least one manufacturing and/or routing constraint by the runtime simulation module;
- Acquisition of the produced constraint by the planification module;
- Restarting the calculation phase with the produced constraint added to the acquired constraints.

## Description

### TECHNICAL FIELD

The technical field of the invention is the field of computer-implemented simulation methods.

The present document concerns a method for simulating a system for manufacturing and/or routing a product, and in particular a method that automatically produces constraints based on an environmental context.

### STATE OF THE ART

Supply chain management is a complex business which comprises an inbound supply chain, production and outbound logistics domains together with all the functions that relate to logistics. Being able to combine information from all these functions, including details about the suppliers, providers, distributors, logistics partners and clients, would provide an opportunity to improve all the functions and optimise them for the best performance of the entire chain. A better performance results in particular in improved manufacturing and delivery times and lower transport costs in terms of resources and money.

To answer this problem, supply chain automatic monitoring solutions are being developed.

To support the development of these supply chain monitoring offerings, that is to be able to demonstrate and test the various features of such solutions, various approaches can be followed.

A first approach is to co-create the capabilities and features in close collaboration with a pilot user with his own supply chain. Another approach is to partner with logistics companies that develop their own platforms for their own processes and offer usage of their platforms as a service. Again another approach is to partner with independent cloud platform providers, that combine supply chain data, enterprise architecture description of typical organizations requiring supply chain analytics and supply chain analytics functions, like network optimization algorithms, cost optimization, etc.

The approaches mentioned previously have limitations. A limitation is linked to the fact that such approaches are limited to specific needs and scope of a user or provider. Furthermore, privacy problems arise: even by anonymizing the name of the user, it would be very simple to identify his products, prices, the composition of his products, and his suppliers. Finally, a large amount of data is required to run such solutions which is costly in terms of time and money.

To address the drawbacks mentioned before, there is a need for a solution being able to fully demonstrate and test the features of an automatic supply chain monitoring solution while providing privacy to a user and being able to adapt to different logistic functions.

### SUMMARY OF THE INVENTION

The present invention solves the above-mentioned problems by providing a solution able to simulate routing and/or manufacturing processes and being able to connect to different automatic supply chain monitoring solutions.

According to a first aspect of the invention, this is satisfied by providing a computer-implemented method for simulating a system for manufacturing and/or routing a product, the method being characterized in that it comprises:
- An initialization phase comprising:
   - Acquisition of a manufacturing and/or routing goal by a planification module;
   - Acquisition of at least one manufacturing and/or routing constraint by the planification module;
- A calculation phase comprising:
   - Production by the planification module, of an order list including at least one manufacturing and/or routing order, according to the acquired goal and each acquired constraint;
   - Acquisition of the order list by a runtime simulation module;
   - Acquisition of a runtime context by the runtime simulation module;
   - Running of the order list in the runtime context by the runtime simulation module;
   - If at least one order of the order list is not executed due to the runtime context:
      - Production of at least one manufacturing and/or routing constraint by the runtime simulation module;
      - Acquisition of the produced constraint by the planification module;
      - Restarting the calculation phase with the produced constraint added to the acquired constraints.

Thanks to the invention, no user data is used as the runtime simulation module runs an order list in a predetermined runtime context. It is understood by "runtime context" a simulation environment. The runtime context comprises information linked to the different actors of a supply chain or a manufacturing and/or routing process, information linked to the types of transports used, to the type of product manufactured and/or routed, to the types of materials used, to the locations of factories, shipment facilities etc. As all this information is predetermined, user data is not used nor shared and privacy issues are solved.

The invention permits to adapt to very different user's needs and scopes by having the ability to acquire different runtime contexts for different users. Different runtime contexts can thus be predetermined, adapted to different needs and supply chain topologies, to provide a solution that can be used by most users.

Furthermore, the invention adapts to different planification modules which can provide different solutions. The runtime simulation module is connected to the planification module and receives an order list, thereby it can be connected to any planification module that creates order lists. This makes the solution flexible by being able to adapt to different logistic functions to be tested and different supply chain monitoring solutions. The simulation module also makes it easy to test and demonstrate different features and monitoring solutions, to select the solution that gives the best performances to the full supply chain.

The method according to the invention may also have one or more of the following characteristics, considered individually or according to any technically possible combinations thereof:
- the goal comprises a quantity of products to be manufactured over a given period of time and at least a delivery destination,
- a manufacturing constraint is chosen among the following constraints: a manufacturing process, a list including sub-products required for manufacturing the product, at least a manufacturing site, at least one site for the supply of at least one sub-product,
- a routing constraint is chosen among the following constraints: a maximum routing time, at least one delivery site, at least one mode of transport, at least one routing route to be avoided, at least one delivery deadline,
- the method comprises a step of issuing a report after each run,
- the report comprises for each order of the list, an execution status and/or a completion date for the execution of the order,
- the runtime context comprises at least one one-time event affecting the completion date and/or the execution status of the order.

Another aspect of the invention relates to a computer program product comprising instructions which, when the program is executed by a computer, causes the computer to carry out the method according to the invention.

Another aspect of the invention relates to a computer-readable medium comprising instructions which, when executed by a computer, cause the computer to carry out the method according to the invention.

The invention finds a particular interest to test and demonstrate one or several automatic monitoring solutions and their different features to several potential users.

### BRIEF DESCRIPTION OF THE FIGURES

Other characteristics and advantages of the invention will become clear from the description that is given thereof below, by way of indication and in no way limiting, with reference to the appended figures, among which:
- Figure 1 is a schematic representation of a simulation system according to the invention,
- Figure 2 is a schematic representation of the simulation method according to the invention,
- Figure 3 is a schematic representation of the simulation method according to the invention in detail,
- Figure 4 is a schematic representation of a step of the simulation method according to the invention,
- Figure 5 is a schematic representation of the simulation method according to a particular embodiment of the invention.

### DETAILED DESCRIPTION

For greater clarity, identical or similar elements are marked by identical reference signs in all of the figures.

The figures are provided for information purposes only and are in no way limiting the invention to their disclosure.

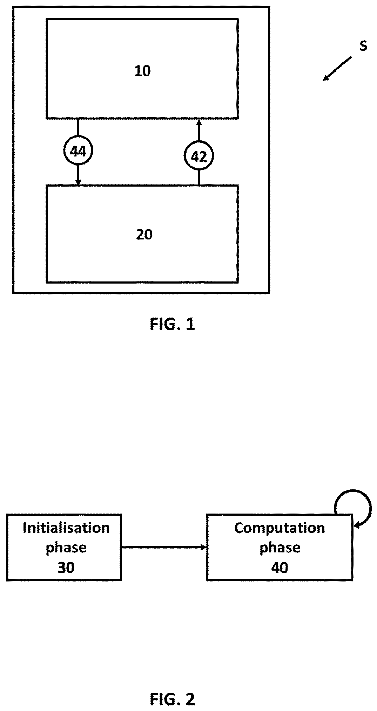

Figure 1 presents the system configured to carry out the method of the invention.

The system S of Figure 1 comprises at least two modules, preferably in the form of software modules. The first module 10 is a runtime simulation module and the second module 20 is a planification module. The runtime simulation module 10 is configured to carry out at least the steps of the method according to the invention linked with simulation of at least part of the routing and/or manufacturing of a product. The planification module 20 is configured to carry out at least the steps of the method according to the invention linked with planning at least part of the routing and/or manufacturing of a product. For example, such a planification module can be part of an automatic supply chain monitoring system.

It is understood by "a supply chain" a system comprising several actors, the system being able to route a product from one geographical location to another geographical location and/or to manufacture a product, the manufacturing comprising at least routing the different raw materials to at least one geographical location and manufacturing the building in the geographical location. To provide said routing, different transport types can be used, such as air, sea and road transport types.

Automatic supply chain monitoring systems permit to optimize the resources used in a supply chain, resulting in reduced operating costs and time. Such systems are more or less complex and take into account very different types of data to provide a list of orders that optimizes the supply chain to manufacture and/or route a product.

The list of orders comprises at least one order, one order comprising an action to be performed, a date or time to perform the action, and can also comprise the actors and resources involved in the action. For example, an order can comprise the a shipment of a product from one location to another, at a predetermined time and date, using road transports. An order can comprise sub-orders, for example several sub-orders can be several shipment stages of the shipment order. Several shipment stages belong to a shipment, a shipment belonging to a shipment plan. Therefore, in the invention, an order list can be a shipment plan, an order can be a shipment and sub-orders can be shipment stages. It will be clear that a list of orders is not limited to shipments.

Figure 2 shows the method for simulating a system for manufacturing and/or routing a product according to the invention. The method is carried out by the system S of Figure 1.

The method M1 can be divided in two main phases: an initialisation phase 30 and a calculation phase 40. The initialisation phase 30 permits to produce and acquire all necessary data for the calculation phase 40. The calculation phase 40 can be repeated several times, as it is iterative as represented by the revolving arrow.

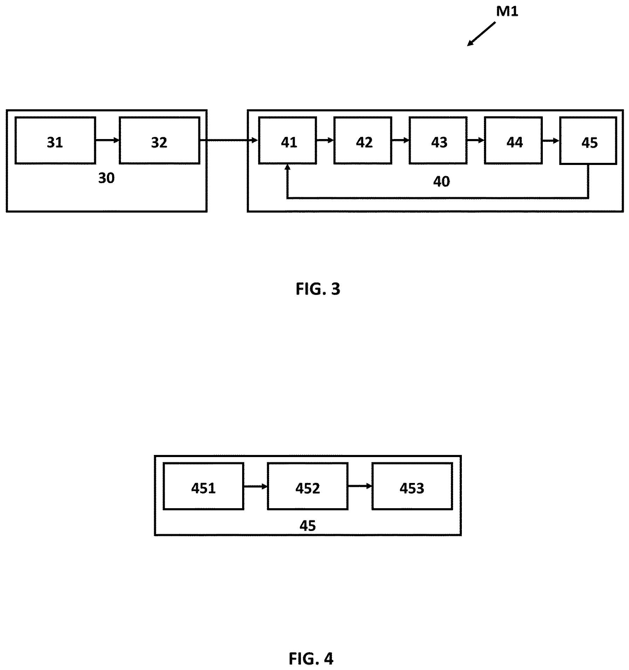

Figure 3 shows a representation of the method M1 with the detail of the steps of each phase 30 and 40. The initialisation phase 30 comprises at least two steps 31 and 32.

In a first step 31, the planification module 20 acquires a manufacturing goal and/or a routing goal. For example, such a manufacturing and routing goal can comprise a quantity of products to be manufactured over a given period of time and at least a delivery destination. A routing goal can comprise raw materials or products to deliver at a delivery destination over a given period of time. A manufacturing goal can comprise a quantity of products to be manufactured over a given period of time. The acquisition can be performed through a network, that is by receiving a data packet comprising said goal. The acquisition can also be performed by asking an operator to enter the different data pieces comprised in a goal, for example using a physical or numerical keyboard to fill in a form displayed by a display module of system S such as a screen. The acquisition can also be performed by acceding data tables stored in a memory of the system S.

In a second step 32, the planification module 20 acquires at least one manufacturing and/or routing constraint. Constraints have an impact on how the goal is achieved. For example, a manufacturing constraint can be a manufacturing process, a list including sub-products required for manufacturing the product, at least a manufacturing site, at least one site for the supply of at least one sub-product. For example, a routing constraint can be a maximum routing time, at least one delivery site, at least one mode of transport, at least one routing route to be avoided, at least one delivery deadline. Constraints can comprise the same type of data as the goal. For example, the goal and a constraint can comprise delivery sites. A delivery site comprised in a constraint can be a temporary delivery site, or a delivery site for raw materials, while a delivery site comprised in a goal can be a final delivery site, such as a shop or a dispatch facility.

The method M1 comprises a second phase 40 of calculation. The calculation phase 40 comprises at least five steps 41 to 45.

In a first step 41 of the phase of calculation 40, the planification module 20 produces an order list comprising at least one manufacturing and/or routing goal according to the goal acquired at step 31 and each constraint acquired at step 32. The step 41 of production of an order list permits to define an expected type of data, that is, an order list. This enables to use any automatic supply chain monitoring solution that is able to provide an order list. An order list produced at step 41 can be of any form understandable by the runtime simulation module 10. For example, an order list can take the form of a data table comprising at least one order, each row of the data table comprising an order and information linked with the order.

In a second step 42 of the calculation phase 40, the runtime simulation module 10 acquires the order list produced at step 41 by the planification module 20. The runtime simulation module 10 and the planification module 20 can exchange information for example through sockets, through physical data links, or through any other mean to communicate.

In a third step 43 of the calculation phase 40, the runtime simulation module 10 acquires a runtime context. The runtime context can be acquired through a network, or from a local memory or database, or from a form filled by an operator. This makes it possible to acquire different runtime contexts based on different user needs.

The runtime context comprises information about the whole supply chain, that is about the different actors, the different raw materials available, the different manufacturing and transit sites available, the types and sizes of containers used and their statuses (for example "allocated" or "available"), the types of radiofrequency tags used (for example Low-Frequency LF, High-Frequency HF, Ultra-High Frequency UHF, Active, Passive etc.) and their status (for example read or not), the types of products used and their condition (for example temperature, humidity, melted etc.). The runtime context can also comprise information about the environment of execution of the orders of the order list, for example the weather, the traffic conditions, the transports conditions, or any other piece of data linked to the environment of execution of the orders of the order list. The runtime context can be in the form of one or several data tables, or in any other form understandable by the runtime simulation module 10. The runtime context comprises for example information about a fictitious company as well as all information related to the routing and/or manufacturing system and process used by this company to manufacture and/or route its product or products. All company information can be manually entered in the form of data tables by an operator or can be retrieved through a network or locally stored in a memory or database.

In a fourth step 44, the order list is run in the runtime context by the runtime simulation module 10. That is, the routing and/or manufacturing is simulated by the runtime simulation module 10. The runtime simulation module 10 simulates the carrying out of the orders by computing delivery times or dates based on traffic conditions, weather, or any other runtime context information having an impact on the carrying out of the order. The runtime simulation module 10 can also compute the quantity of materials or of products arriving at the delivery goal of the order, or it can compute any other information linked to the carrying out of the order.

Then, at a step 45, it is verified, by the runtime simulation module, that a condition is met. This condition is checked at every order of the order list carried out at the step 44. The condition is verified if at least one order of the order list is not executed due to the runtime context. That is, if at least one order can not be carried out because of the runtime context, for example if the planned delivery time can not be met because of the traffic conditions, if a transport route can not be taken because of the weather, or if any other one-time event or recurring event of the runtime context affects the carrying out of an order of the order list at the point of not meeting a goal of the order.

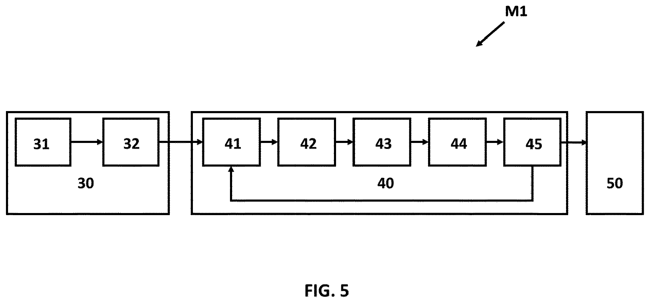

If this condition is not met, as represented at Figure 5, the step 45 comprises three sub-steps 451 to 453.

A first sub-step 451 comprises the production of at least one manufacturing and/or routing constraint by the runtime simulation module 10. This production comprises generating at least one piece of information linked with the order of the order list that could not be carried out due to the runtime simulation context. The produced constraint is preferably in the same form as the constraint previously acquired by the planification module 20 at step 32. For example, if the order of the order list that could not be carried out is a transport order and if it could not be carried out because of the weather having blocked a transport route, a routing constraint can be created indicating that the transport route cannot be taken. If a manufacturing order can not be carried out because a quantity of raw materials is not sufficient, a manufacturing constraint can be created indicating that the product can not be manufactured in the determined manufacturing delay.

In a step 452, the produced constraint is acquired by the planification module 20. That is, the runtime simulation module 10 sends the produced constraint to the planification module 20.

In a step 453, a restart command is executed by both modules to restart the calculation phase 40 with the constraint produced at step 451 added to the constraints acquired at step 32. This is iterative, meaning that the list of constraints keeps expanding when orders can not be executed. That way, the features and capabilities of the planification module 20 are constantly tested, enabling the showcase of the full potential of the solution.

The runtime simulation module 10 can have the authorization and ability to delete constraints when the runtime simulation context requires it, for example when the weather has changed and a transport route is now practicable. This can be done by two means : or by producing a new constraint cancelling the previous constraint linked with the event, or by producing a "delete constraint" command, which, when carried out by the planification module, deletes the determined constraint.

As represented at Figure 5, the method can also comprise a step 50 of issuing a report after each run. The issued report can comprise, for each order of the list, an execution status and/or a completion date for the execution of the order. The issued report can be in any form, displayable on a display module such as a computer screen, and can be automatically sent through a network for storing in a database or stored locally in a memory.

## Claims

1. Computer-implemented method for simulating a system for manufacturing and/or routing a product, the method being **characterized in that** it comprises:
- An initialization phase comprising:
∘ Acquisition of a manufacturing and/or routing goal by a planification module;
∘ Acquisition of at least one manufacturing and/or routing constraint by the planification module;
- A calculation phase comprising:
∘ Production by the planification module, of an order list including at least one manufacturing and/or routing order, according to the acquired goal and each acquired constraint;
∘ Acquisition of the order list by a runtime simulation module;
∘ Acquisition of a runtime context by the runtime simulation module;
∘ Running of the order list in the runtime context by the runtime simulation module;
∘ If at least one order of the order list is not executed due to the runtime context:
- Production of at least one manufacturing and/or routing constraint by the runtime simulation module;
- Acquisition of the produced constraint by the planification module;
- Restarting the calculation phase with the produced constraint added to the acquired constraints.

2. Method according to claim 1, **characterized in that** the goal comprises a quantity of products to be manufactured over a given period of time and at least a delivery destination.

3. Method according to any of the preceding claims, **characterized in that** the manufacturing constraint is chosen among the following constraints: a manufacturing process, a list including sub-products required for manufacturing the product, at least a manufacturing site, at least one site for the supply of at least one sub-product.

4. Method according to any of the preceding claims, **characterized in that** the routing constraint is chosen among the following constraints: a maximum routing time, at least one delivery site, at least one mode of transport, at least one routing route to be avoided, at least one delivery deadline.

5. Method according to any of the preceding claims, **characterized in that** it comprises a step of issuing a report after each run.

6. Method according to claim 5, **characterized in that** the report comprises for each order of the list, an execution status and/or a completion date for the execution of the order.

7. Method according to claim 6, **characterized in that** the runtime context comprises at least one one-time event affecting the completion date and/or the execution status of the order.

8. Computer program product comprising instructions which, when the program is executed by a computer, causes the computer to carry out the method according to any one of claims 1 to 7.

9. Computer-readable medium comprising instructions which, when executed by a computer, cause the computer to carry out the method according to any one of claims 1 to 7.
